# EUROPÄISCHE PATENTSCHRIFT

(11) **EP 1 947 444 B1**
(45) Veröffentlichungstag und Bekanntmachung des Hinweises auf die Patenterteilung: **03.11.2010**
(21) Anmeldenummer: 08000112.6
(22) Anmeldetag: 04.01.2008
(51) Int. Cl.: G01N 17/00, G01N 21/00

(54) **Vorrichtung zur Licht- oder Bewitterungsprüfung enthaltend ein Probengehäuse mit integriertem UV-Strahlungsfilter**
Device for testing light or weathering containing a sample housing with integrated UV radiation filter
Dispositif destiné à la vérification de la lumière ou du vieillissement d'un boîtier d'échantillons à l'aide d'un filtre à rayons UV intégré

(30) Priorität: 17.01.2007 DE 102007002415
(43) Veröffentlichungstag der Anmeldung: 23.07.2008
(73) Patentinhaber: Atlas Material Testing Technology GmbH, 63589 Linsengericht/Altenhasslau (DE)
(72) Erfinder: Schönlein, Artur, 65428 Rüsselsheim (DE)
(74) Vertreter: Patentanwälte Lambsdorff & Lange

(56) Entgegenhaltungen:
- DE-A1- 1 598 899
- DE-A1- 2 054 303
- FR-A- 2 430 609
- GB-A- 2 064 788
- JP-A- 57 000 544
- US-A- 3 433 949
- US-A- 3 664 188
- US-A- 3 675 477
- US-A- 4 012 954

## Beschreibung

Die vorliegende Erfindung betrifft eine Vorrichtung zur Licht- oder Bewitterungsprüfung und ein Gehäuse für eine derartige Vorrichtung.

In Vorrichtungen zur künstlichen Bewitterung von Werkstoffproben soll die Lebensdauer von Werkstoffen abgeschätzt werden, die in dieser Anwendung ständig den natürlichen Wetterverhältnissen ausgesetzt sind und sich somit unter klimatischen Einflüssen wie Sonnenlicht, Sonnenwärme, Feuchtigkeit und dergleichen verschlechtern. Um eine gute Simulation der natürlichen Witterungsgegebenheiten zu erhalten, muss die spektrale Energieverteilung des in der Vorrichtung erzeugten Lichtes möglichst derjenigen der natürlichen Sonnenstrahlung entsprechen, aus welchem Grund in solchen Geräten als Strahlungsquelle Xenon-Strahler eingesetzt werden. Eine zeitraffende Alterungsprüfung der Werkstoffe wird im Wesentlichen durch eine gegenüber den natürlichen Verhältnissen konstanten und intensivierten Bestrahlung der Proben erzielt, durch die die Alterung der Proben beschleunigt wird. Somit lässt sich nach verhältnismäßig kurzer Zeit eine Aussage über das Langzeit-Alterungserhalten einer Werkstoffprobe machen.

Ein Großteil der in künstlichen Bewitterungsgeräten untersuchten Werkstoffproben besteht aus polymeren Werkstoffen. Bei diesen wird die witterungsbedingte Verschlechterung im Wesentlichen durch den UV-Anteil der Sonnenstrahlung hervorgerufen. Die dabei ablaufenden fotochemischen Primärprozesse, also die Absorption von Photonen und die Erzeugung angeregter Zustände oder freier Radikale, sind temperaturunabhängig. Dagegen können die nachfolgenden Reaktionsschritte mit den polymeren oder additiven temperaturabhängig sein, sodass die beobachtete Alterung der Werkstoffe ebenfalls temperaturabhängig ist.

Die vorgenannten Vorrichtungen zur künstlichen Bewitterung von Proben weisen neben der Strahlungsquelle in der Regel weitere Einrichtungen auf, mit denen andere künstliche Wetterzustände erzeugt werden können, wie beispielsweise hohe Luftfeuchtigkeit, Regen oder Schadgase. Neben diesen künstlichen Bewitterungsvorrichtungen gibt es jedoch auch Lichtprüfungsvorrichtungen, in denen nur eine Strahlungsquelle enthalten ist. Solche Lichtprüfungsvorrichtungen können beispielsweise für die Bestimmung des Sonnenschutzfaktors (SPF) oder Lichtschutzfaktors (LSF) von chemischen oder physikalischen Lichtschutzfiltern wie UV-Lichtschutzfiltern verwendet werden. Für die Bestimmung des Sonnenschutzfaktors ist die spektrale Energieverteilung der Sonne von 290 nm bis 400 nm definiert. Als Standard-Sonne wird z.B. die in der DIN 67501 festgelegte Spektralverteilung definiert. Die spektrale Bestrahlungsstärke geht dabei bis zu 10⁻⁵/10⁻⁶/W/m² herunter. In Sonnensimulatoren, die für Bewitterungstests eingesetzt werden, sind solche Anforderungen nicht vorhanden. Die in der CIE 85 (Tabelle 4) spezifizierte spektrale Energieverteilung der Sonne beginnt erst bei 305 nm und wird bei 300 nm mit 0 angenommen. Die spektralen Bestrahlungsstärken liegen dabei in der Größenordnung 0,1 W/m² und größer.

In den bisher bekannten Bewitterungsvorrichtungen werden üblicherweise eine oder mehrere UV-Strahlungsquellen wie Xenon-Strahlungsquellen eingesetzt. Mit diesen kann bekanntermaßen das Sonnenspektrum recht gut simuliert werden, wobei jedoch die emittierte Strahlung relativ hohe Spektralanteile im infraroten und ultravioletten Spektralbereich aufweist, die geeignet gefiltert werden müssen. Bezüglich des UV-Anteils kann die Xenon-Strahlung mit einem WG320-Filter mit entsprechender Dicke gefiltert werden und erfüllt somit die oben genannte Anforderung der Standard-Sonne für die Bestimmung des Sonnenschutzfaktors.

In den herkömmlichen Bewitterungsgeräten treten jedoch die folgenden Probleme auf. Die üblichen Xenon-Strahler mit einem dotierten Quarzkolben emittieren Strahlung mit Wellenlängen bis zu 250 nm. Ein handelsübliches WG320-Filter (Firma Schott) kann nicht gebogen werden, weshalb Streifen von 10 mm Breite und 300 mm Länge aneinander gesetzt werden müssen. Die Strahlung kann an den Stoßstellen, an denen die Filter aneinandergesetzt sind oder an Stellen, an denen Bleche aneinandergesetzt werden, passieren. Des Weiteren kann sich durch Temperaturänderungen die Filterkante verschieben. Die Kantenlage des WG320-Filters ist abhängig von der das Filter umgebenden Temperatur (Temperatur-Drift 0,06 nm/K). Die Toleranzen der Prüfanforderung für die Bestimmung des Lichtschutzfaktors nach der COLIPA-Methode sind derartig eng, dass man bei einer Änderung der Umgebungstemperatur von 40°K aus der Toleranz herausfallen kann. Da die Filter des Weiteren in der Nähe des Xenon-Strahlers angeordnet sind, liegt die Umgebungstemperatur für die Filter zwischen 70°C und 110°C je nach Lampenleistung. Dies bedeutet, dass die WG320-Filter zwischen 0,7 und 1 mm dick sind. Bei Streifen von 10 mm Breite und einer Länge von ca. 300 mm ist die gesamte Anordnung recht instabil.

Bewitterungsgeräte mit UV-Filterfenstern im Proben behälter und Proben Kühlung sind bekannt aus US 366 4 188 und FR 243 06 09.

Die Erfindung ist durch die Merkmale des Patentanspruchs 1 gekennzeichnet. Vorteilhafte Weiterbildungen und Ausgestaltungen sind in den Unteransprüchen und den nebengeordneten Patentansprüchen angegeben.

Ein wesentlicher Gedanke der vorliegenden Erfindung besteht darin, das UV-Strahlungsfilter als Teil eines Gehäuses vorzusehen, welches die Probe mindestens teilweise umschließt.

Die erfindungsgemäße Vorrichtung zur Licht- oder Bewitterungsprüfung einer Probe weist eine Kammer, eine in der Kammer angeordnete UV-Strahlungsquelle, und ein in der Kammer angeordnetes Gehäuse auf, welches eine UV-Strahlungsfilter Gehäusewand enthält und welches die Probe mindestens teilweise umschließt.

Ein wesentlicher Vorteil der erfindungsgemäßen Vorrichtung liegt darin, dass das UV-Strahlungsfilter nicht mehr in unmittelbarer Nähe des Xenon-Strahlers angeordnet ist. Dadurch entfallen zunächst sämtliche in konventionellen Vorrichtungen benötigten Einrichtungen, mit denen das UV-Strahlungsfilter in der Nähe des Xenon-Strahlers gehaltert wird. Stattdessen wird das UV-Strahlungsfilter als Teil des Gehäuses oder eine Gehäusewand ausgebildet und somit wie das Gehäuse gehaltert. Es müssen nicht mehr mehrere Streifen von Filtern aneinandergesetzt werden, um somit den Xenon-Strahler zu umgeben. Vielmehr bildet das Vorhandensein eines Gehäuses die Möglichkeit, dieses lichtdicht nach innen abzuschließen, sodass keinerlei Streustrahlung von dem Xenon-Strahler die Probe erreichen kann. Es kann somit nur die von dem Xenon-Strahler emittierte UV-Strahlung auf direktem Wege von dem Xenon-Strahler die Probe erreichen. Wenn das UV-Strahlungsfilter als Teil des Gehäuses so angeordnet wird, dass es zwischen dem Xenon-Strahler und der Probe liegt, kann nur gefilterte UV-Strahlung die Probe erreichen. Somit kann das Auftreffen von Streustrahlung auf der Probe sicher vermieden werden.

Ein weiterer Vorteil der vorliegenden Erfindung besteht darin, dass das UV-Strahlungsfilter keiner hohen Temperaturbelastung ausgesetzt ist, da es sich nicht mehr in unmittelbarer Nähe des Xenon-Strahlers befindet. Da in einiger Entfernung von dem Xenon-Strahler infolge der Temperaturregelung keine derartigen Temperaturschwanken auftreten wie in der Nähe des Xenon-Strahlers, kann die Durchlass-Charakteristik des UV-Strahlungsfilters konstant gehalten werden. Insbesondere bei Verwendung eines Kantenfilters wie eines WG320-Filters kann die Kantenlage infolge der relativen Temperaturstabilität konstant gehalten werden. Dies ermöglicht es beispielsweise, die Toleranzen der Prüfanforderung für die Bestimmung des Lichtschutzfaktors nach den gängigen Normen, beispielsweise der DIN 67501 oder der COLIPA-Methode, einzuhalten. Ein weiterer Vorteil der erfindungsgemäßen Vorrichtung besteht darin, dass infolge der Tatsache, dass das UV-Strahlungsfilter sich nicht in unmittelbarer Nähe des Xenon-Strahlers befindet, größere Freiheit in der Ausführung des UV-Strahlungsfilters, insbesondere der Dicke des UV-Strahlungsfilters besteht.

Eine vorteilhafte Ausführungsform der erfindungsgemäßen Vorrichtung sieht vor, dass das Gehäuse eine Bodenwand zur Aufnahme der Probe, ein der Bodenwand gegenüberliegendes UV-Strahlungsfilter und eine Mehrzahl von Seitenwänden aufweist, welche die Bodenwand und das UV-Strahlungsfilter miteinander verbinden. Insbesondere kann dabei vorgesehen sein, dass die der Bodenwand gegenüberliegende Deckenwand des Gehäuses vollständig durch das UV-Strahlungsfilter gebildet wird.

Das UV-Strahlungsfilter weist vorzugsweise die Form einer rechteckigen Scheibe auf, wobei insbesondere das Gehäuse vier Seitenwände aufweist, welche jeweils die vier Seitenkanten des UV-Strahlungsfilters mit der Bodenwand verbinden. Dies schafft die Möglichkeit einer lichtdichten Ausbildung des Gehäuses, sodass keinerlei Streulicht oder im Wesentlichen keinerlei Streulicht des Xenon-Strahlers die Probe erreichen kann. Die lichtdichte Abdichtung des Gehäuses kann dabei mit handelsüblichen Dichtungen erfolgen.

Bei Bewitterungsgeräten unterscheidet man generell zwischen Bewitterungsgeräten mit ortsfesten Proben, wie beispielsweise das Gerät SUNTEST der Anmelderin, und Bewitterungsgeräten mit ortsveränderlichen Proben. Bei Bewitterungsgeräten mit ortsfesten Proben befinden sich an einer Innenwand der Bewitterungskammer, welche zumeist die horizontale Bodenplatte der Bewitterungskammer ist, Aufnahmeflächen für Proben, die zumeist rechteckförmige Platten mit Normgrößen sind. Gegenüber der Bodenplatte, also an einer oberen horizontalen Innenwand sind die UV-Strahlungsquellen angebracht. Bei Bewitterungsgeräten mit ortsveränderlichen Proben ist die UV-Strahlungsquelle als zentrale stabförmige Strahlungsquelle angeordnet und die Proben werden auf einem Gestell montiert, welches in eine Eigendreh-Bewegung versetzt werden kann, wobei die ebenfalls zumeist plattenförmigen Proben mit der zu untersuchenden Oberfläche während der Drehbewegung ständig der Strahlungsquelle ausgesetzt sind.

In einem Bewitterungsgerät mit ortsfesten Proben wird die Bodenwand des Gehäuses durch die Aufnahmefläche, oder allgemein gesagt durch einen Abschnitt einer Innenwand der Bewitterungskammer gebildet.

In Bewitterungsgeräten mit feststehenden Proben wie dem Gerät SUNTEST der Anmelderin ist es im Regelfall vorgesehen, dass innerhalb der Bewitterungskammer eine Luftzirkulation derart vorgesehen ist, dass die Luft im Wesentlichen laminar an den Proben vorbeistreicht und somit für eine konstante Umgebungstemperatur in unmittelbarer Nähe der Probe sorgt. Bei der erfindungsgemäßen Vorrichtung kann dies derart realisiert werden, dass in zwei gegenüberliegenden Seitenwänden des Gehäuses Öffnungen für den Durchtritt von Luft geformt sind. Vorzugsweise sind in diesem Fall direkt an die Öffnungen Verbindungsleitungen wie Schläuche oder dergleichen angeschlossen, damit auch die Öffnungen gegen ein Eindringen von Streulicht in den Innenraum des Gehäuses abgedichtet sind.

Es kann ferner vorgesehen sein, dass auf der dem UV-Strahlungsfilter abgewandten Seite der Bodenwand des Gehäuses oder in der Bodenwand selbst eine Kühlungseinrichtung zur Kühlung der Probe angeordnet ist. Die Kühlungseinrichtung kann aus einer Wasserkühlung bestehen oder auch durch ein Kühlungsaggregat gegeben sein.

In einem Bewitterungsgerät mit ortsfesten Proben wie dem Gerät SUNTEST sind üblicherweise eine Mehrzahl von Aufnahmeflächen, sogenannte Probentische, für eine entsprechende Mehrzahl von Proben vorgesehen. In diesem Fall kann vorgesehen sein, dass eine entsprechende Anzahl Gehäuse angeordnet ist, welche die jeweiligen Proben umschließen.

Es kann alternativ dazu vorgesehen sein, dass innerhalb eines Gehäuses mehrere Proben angeordnet werden. Dies würde bedeuten, dass auf der Bodenwand des Gehäuses eine Mehrzahl von Proben angeordnet werden und von einem einzigen gemeinsamen Gehäuse umschlossen werden. Beide dargestellten Varianten sind sowohl in Bewitterungsgeräten mit ortsfesten als auch in solchen mit ortsveränderlichen Proben denkbar.

Das UV-Strahlungsfilter ist beispielsweise durch ein Kantenfilter gegeben, wobei die Kante durch einen innerhalb eines bestimmten Wellenlängenbereichs liegenden Übergang zwischen einem absorbierenden und einem transmittierenden Zustand des UV-Strahlungsfilters gegeben ist. Wie bereits eingangs erläutert, sind bei Anwendungen wie der Bestimmung des Sonnenschutzfaktors oder dergleichen solche Kantenfilter von Interesse, bei denen die Wellenlänge 320 nm in dem Wellenlängenbereich des Übergangs enthalten ist. Bei einem handelsüblichen WG320-Filter beträgt die Transmission 50% bei einer Wellenlänge von 320 nm. Das bei der vorliegenden Erfindung verwendete UV-Strahlungsfilter kann somit in seiner Zusammensetzung durch ein WG320-Filter gegeben sein, wobei das Filter in Form und Größe angepasst werden müsste, um in ein Gehäuse eingesetzt werden zu können. Es ist denkbar, dass auch andere Kantenfilter oder Interferenzfilter mit geeigneten Kanten (Übergängen zwischen einem absorbierenden und einem transmittierendem Zustand) zur Untersuchung von Alterungseffekten eingesetzt werden können.

Im Folgenden werden Ausführungsbeispiele der Erfindung anhand der Zeichnungen näher erläutert. Es zeigen:
- Fig. 1: ein Ausführungsbeispiel für ein erfindungsgemäßes Gehäuse für eine Vorrichtung zur Licht- oder Bewitterungsprüfung; und
- Fig. 2: ein Ausführungsbeispiel für eine erfindungsgemäße Vorrichtung zur Licht- oder Bewitterungsprüfung.

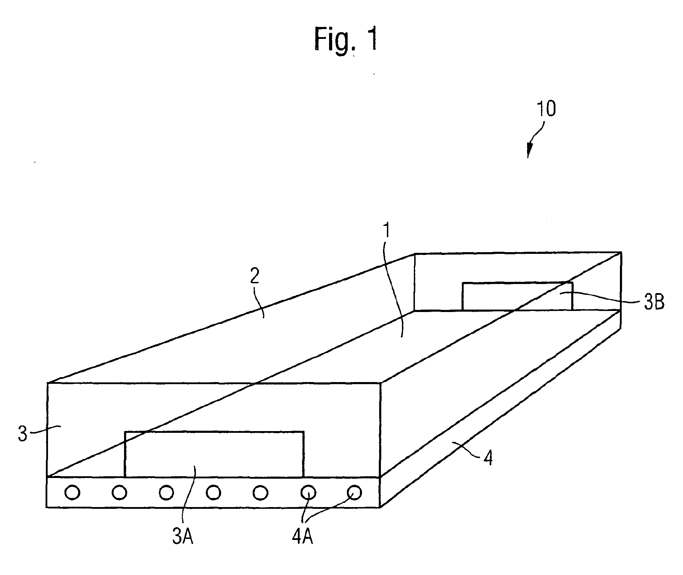

In der Fig. 1 ist ein erfindungsgemäßes Gehäuse für eine Vorrichtung zur Licht- oder Bewitterungsprüfung von Proben perspektivisch dargestellt. Das Gehäuse 10 weist eine Bodenwand 1 auf, auf der zu untersuchende Proben geeignet angeordnet werden können. Zu diesem Zweck können auf der Bodenwand 1 geeignet geformte Aufnahmeflächen oder Probentische angeordnet sein, auf denen die Proben befestigt werden können. Die Proben können beispielsweise, wie bei Bewitterungstests üblich, rechteckförmige Scheiben mit genormten Größen sein, die mit einer zu untersuchenden Beschichtung versehen sind.

Der Bodenplatte gegenüberliegend ist als Deckenplatte des Gehäuses ein UV-Strahlungsfilter 2 angeordnet. Dieses UV-Strahlungsfilter kann beispielsweise durch ein WG320-Filter, wie weiter oben beschrieben, gegeben sein. In dem dargestellten Ausführungsbeispiel wird die Oberseite des Gehäuses 10 vollständig durch das UV-Strahlungsfilter eingenommen. Das Gehäuse 10 ist dafür vorgesehen, innerhalb einer erfindungsgemäßen Vorrichtung so angeordnet zu werden, dass sich das UV-Strahlungsfilter zwischen der Bodenplatte 1 und der in der Kammer der Vorrichtung angeordneten UV-Strahlungsquelle befindet, sodass die von der UV-Strahlungsquelle emittierte Strahlung auf direktem Wege die auf der Bodenplatte angeordneten Proben nur nach Durchtritt durch das UV-Strahlungsfilter 2 erreichen kann.

Die Bodenplatte 1 und das UV-Strahlungsfilter 2 weisen gemäß dem Ausführungsbeispiel rechteckige Formen auf. Das Gehäuse 10 enthält des Weiteren vier Seitenwände 3, mit denen das UV-Strahlungsfilter 2 mit der Bodenplatte 1 verbunden ist. Die Seitenwände 3 selbst und die Übergangs- bzw. Nahtstellen zwischen den Seitenwänden 3 und der Bodenplatte 1 einerseits und dem UV-Strahlungsfilter 2 andererseits sind vorzugsweise lichtdicht abgeschlossen, was durch handelsübliche Dichtungen erfolgen kann. Damit kann erreicht werden, dass nur solche Lichtstrahlung, die durch den UV-Strahlungsfilter gefiltert worden ist, die Probe erreichen kann. Der Xenon-Strahler emittiert wie oben ausgeführt auch Licht mit Wellenlängen unterhalb 300 nm, welches durch das UV-Strahlungsfilter 2 gefiltert werden kann. Die lichtdichte Ausführung des Gehäuses sorgt dafür, dass auch keinerlei Streulicht von dem Xenon-Strahler die Proben erreichen kann.

Das Gehäuse 10 weist ferner zwei gegenüberliegende Seitenwände 3 auf, in denen Öffnungen 3A und 3B für den Durchtritt von Luft geformt sind. Da die Proben durch die Bestrahlung aufgeheizt werden, ist es in Bewitterungsgeräten üblich, einen Luftstrom über die Proben zu leiten, um diese zu kühlen und für eine gleichmäßige Temperatur zu sorgen. Die Öffnung 3A kann beispielsweise eine Lufteintrittsöffnung sein und die Öffnung 3B kann eine Luftaustrittsöffnung sein. Es ist von Vorteil, wenn direkt an die Öffnungen 3A und 3B lichtdichte Anschlüsse für Verbindungsleitungen wie Luftschläuche oder dergleichen montiert sind, damit keinerlei Streulicht von dem Xenon-Strahler die Öffnungen 3A und 3B erreichen und in das Innere des Gehäuse 10 gelangen kann.

Das Gehäuse 10 weist ferner eine Kühlungseinrichtung 4 auf, die unterhalb der Bodenwand 1 angeordnet ist. Diese weist beispielsweise Bohrungen 4A auf, die sich parallel zueinander in Längs- oder Querrichtung des Gehäuses 10 erstrecken und durch die beispielsweise Kühlwasser geleitet werden kann.

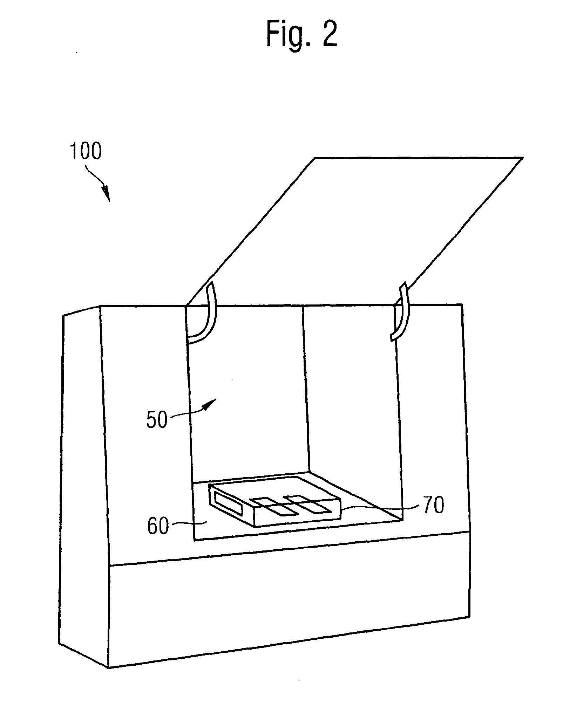

In der Fig. 2 ist eine Ausführungsform für eine erfindungsgemäße Vorrichtung zur Licht- oder Bewitterungsprüfung von Proben perspektivisch dargestellt. Die Vorrichtung 100 ist in diesem Ausführungsbeispiel durch ein Bewitterungsgerät mit ortsfesten Proben wie das Gerät SUNTEST der Anmelderin gegeben. Die Vorrichtung 100 weist eine Bewitterungskammer 50 auf, die für Bewitterungstestläufe hermetisch verschließbar ist. An der oberen Deckenwand der Bewitterungskammer 50 sind eine Mehrzahl von Xenon-Strahlern angebracht. Auf einer Bodenplatte 60 sind Probentische für die Aufnahme von Proben angeordnet. Auf der Bodenplatte 60 ist ein Gehäuse 70 angeordnet, in welchem zwei Proben auf dafür vorgesehenen Probentischen oder Aufnahmeflächen angeordnet werden können. Die Bodenplatte des Gehäuses 70 wird somit durch einen Abschnitt der Bodenplatte 60 der Bewitterungskammer 50 gebildet. Die Öffnungen in gegenüberliegenden Seitenflächen des Gehäuses 70 sind mit Luftschläuchen verbunden (nicht dargestellt), die mit einem in der Vorrichtung 100 außerhalb der Bewitterungskammer 50 angeordneten Lüfter verbunden sind.

Alternativ dazu kann auch vorgesehen sein, dass mehrere Gehäuse auf der Bodenplatte 60 angeordnet sind, die jeweils in etwa die Größe eines Probentisches haben, sodass in jedem Gehäuse nur eine Probe untergebracht werden kann.

## Patentansprüche

1. Bewitterungsgerät zur Bewitterungsprüfung einer Probe, mit
- einer hermetisch verschließbaren Kammer (50);
- einer in der Kammer (50) angeordneten UV-Strahlungsquelle; und
- einem in der Kammer (50) angeordneten Gehäuse (10; 70), welches eine Gehäusewand mit einem UV-Strahlungsfilter (2) aufweist und die Probe mindestens teilweise umschließt; wobei
- in zwei gegenüberliegenden Seitenwänden (3) des Gehäuses (10; 70) Öffnungen (3A, 3B) für den Durchtritt von Luft geformt sind,
**dadurch gekennzeichnet, dass**
- das Gehäuse (10; 70) in der Kammer (50) stationär angeordnet ist;
- das Gehäuse (10; 70) eine rechteckige Bodenwand (1) zur Aufnahme der Probe und eine der Bodenwand (1) direkt gegenüberliegende, aus dem UV-Strahlungsfilter (2) bestehende ebene, rechteckige Gehäusewand aufweist, wobei die Bodenwand (1) und das UV-Strahlungsfilter (2) flächenmäßig gleich dimensioniert und durch die Seitenwände (3) miteinander verbunden sind;
- an die Öffnungen (3A, 3B) Verbindungsleitungen für die Zufuhr und Abfuhr von Luft während einer Bewitterungsprüfung angeschlossen sind;
- das Bewitterungsgerät einen außerhalb der Kammer (50) angeordneten Lüfter enthält, mit welchem die Verbindungsleitungen verbunden sind; und
- die Öffnungen (3A, 3B) jeweils einen rechteckigen Querschnitt aufweisen und derart angeordnet sind, dass eine ihrer Längskanten in der Ebene der Bodenwand (1) liegt.

2. Bewitterungsgerät nach Anspruch 1,
**dadurch gekennzeichnet, dass**
- das UV-Strahlungsfilter (2) ein Kantenfilter ist, wobei Kante durch einen innerhalb eines Wellenlängenbereichs liegenden Übergang zwischen einem absorbierenden und einem transmittierenden Zustand des UV-Strahlungsfilters (2) gegeben ist.

3. Bewitterungsgerät nach Anspruch 2,
**dadurch gekennzeichnet, dass**
- in dem Wellenlängenbereich die Wellenlänge 320 nm enthalten ist.

4. Bewitterungsgerät nach einem der Ansprüche 1 bis 3,
**dadurch gekennzeichnet, dass**
- auf der dem UV-Strahlungsfilter (2) abgewandten Seite der Bodenwand (1) oder in der Bodenwand (1) selbst eine Kühlungseinrichtung zur Kühlung der Probe angeordnet ist.

5. Bewitterungsgerät nach einem der Ansprüche 1 bis 4,
**dadurch gekennzeichnet, dass**
- innerhalb eines Gehäuses (10; 70) mehrere Proben angeordnet werden können.

6. Bewitterungsgerät nach einem der Ansprüche 1 bis 4,
**dadurch gekennzeichnet, dass**
- innerhalb eines Gehäuses (10; 70) genau eine Probe angeordnet werden kann.

7. Bewitterungsgerät nach einem der Ansprüche 1 bis 6,
**dadurch gekennzeichnet, dass**
- in der Bewitterungskammer (50) mehrere Gehäuse angeordnet werden können.

8. Bewitterungsgerät nach einem der Ansprüche 1 bis 6,
**dadurch gekennzeichnet, dass**
- in der Bewitterungskammer genau ein Gehäuse (70) angeordnet werden kann.

## Claims

1. A weathering device for weather testing of a specimen, comprising:
- a hermetically closable chamber (50);
- a UV radiation source sited in the chamber (50); and
- an enclosure (10; 70) arranged in the chamber (50) comprising an enclosure wall comprising an UV radiation filter (2) and enclosing the specimen at least in part; wherein
- formed in two facing side walls (3) of the enclosure (10; 70) are ports (3A, 3B) for the passage of air,
**characterized in that**
- the enclosure (10; 70) is arranged stationary in the chamber (50);
- the enclosure (10; 70) comprises a rectangular bottom wall (1) for reception of the specimen and a rectangular enclosure wall directly facing the bottom wall (1) and consisting of the UV radiation filter (2), wherein the bottom wall (1) and the UV radiation filter (2) comprise equal square dimensions and are connected with each other by the side walls (3);
- connector lines are fastened on the ports (3A, 3B) for the supply and removal of air during a weather testing;
- the weathering device includes a fan arranged outside of the chamber (50), the fan being connected with the connector lines; and
- the ports (3A, 3B) each comprise a rectangular cross-section and are arranged such that one of their longitudinal edges is situated in the plane of the bottom wall (1).

2. The weathering device according to claim 1, **characterized in that**
- the UV radiation filter (2) is an edge filter, wherein the edge is formed by a transition located within a wavelength range between an absorbing and a transmitting condition of the UV radiation filter (2).

3. The weathering device according to claim 2,
**characterized in that**
- included in the wavelength range is the wavelength 320 nm.

4. The weathering device according to one of claims 1 to 3,
**characterized in that**
- at a side of the bottom wall (1) facing away from the UV radiation filter (2), or in the bottom wall (1) itself, there is included a means for cooling the specimen.

5. The weathering device according to one of claims 1 to 4,
**characterized in that**
- several specimens can be arranged within one enclosure (10; 70).

6. The weathering device according to one of claims 1 to 4,
**characterized in that**
- precisely one specimen can be arranged within one enclosure (10; 70).

7. The weathering device according to one of claims 1 to 6,
**characterized in that**
- several enclosures can be arranged in the weathering chamber (50).

8. The weathering device according to one of claims 1 to 6,
**characterized in that**
- precisely one enclosure (70) can be arranged in the weathering chamber (50).

## Revendications

1. Appareil pour l'exposition artificielle aux intempéries / le vieillissement artificiel d'un échantillon, comprenant :
- une chambre qui peut être fermée hermétiquement (50) ;
- une source de rayonnement ultraviolet (UV) qui est agencée dans la chambre (50) ; et
- un boîtier (10 ; 70) agencé dans la chambre (50), lequel présente une paroi de boîtier dotée d'un filtre de rayonnement ultraviolet (UV) (2) et qui entoure l'échantillon au moins en partie ; dans lequel :
- des ouvertures (3A, 3B) pour le passage de l'air sont conformées dans deux parois latérales placées l'une à l'opposé de l'autre (3) du boîtier (10 ; 70),
**caractérisé en ce que :**
- le boîtier (10 ; 70) est agencé dans la chambre (50) de manière stationnaire ;
- le boîtier (10 ; 70) présente une paroi de fond rectangulaire (1) pour la réception de l'échantillon et une paroi de boîtier rectangulaire et plane, placée directement à l'opposé et constituée du filtre de rayonnement ultraviolet (UV) (2), dans lequel la paroi de fond (1) et le filtre de rayonnement ultraviolet (UV) (2) sont dimensionnés de manière identique quant à leurs surfaces et sont reliés entre eux par les parois latérales (3) ;
- des conduits de liaison pour l'apport et l'évacuation de l'air pendant un contrôle d'exposition artificielle aux intempéries / de vieillissement artificiel sont reliés aux ouvertures (3A, 3B) ;
- l'appareil pour l'exposition artificielle aux intempéries / le vieillissement artificiel contient un ventilateur agencé en dehors de la chambre (50) avec lequel les conduits de liaison sont reliés ; et
- les ouvertures (3A, 3B) présentent respectivement une section transversale rectangulaire et sont agencées de telle sorte qu'une de leurs arêtes longitudinales se trouve dans le plan de la paroi de fond (1).

2. Appareil pour l'exposition artificielle aux intempéries / le vieillissement artificiel selon la revendication 1,
**caractérisé en ce que**
- le filtre de rayonnement ultraviolet (UV) (2) est un filtre optique à arête dans lequel l'arête est donnée par une transition qui se trouve à l'intérieur d'une plage de longueur d'onde entre un état absorbant et un état transmetteur du filtre de rayonnement ultraviolet (UV) (2).

3. Appareil pour l'exposition artificielle aux intempéries / le vieillissement artificiel selon la revendication 2,
**caractérisé en ce que**
- la longueur d'onde de 320 nm est contenue dans la plage de longueur d'onde.

4. Appareil pour l'exposition artificielle aux intempéries / le vieillissement artificiel selon l'une des revendications 1 à 3,
**caractérisé en ce que**
- un dispositif de refroidissement pour le refroidissement de l'échantillon est agencé sur le côté détourné du filtre de rayonnement ultraviolet (UV) (2) ou dans la paroi de fond (1) elle-même.

5. Appareil pour l'exposition artificielle aux intempéries / le vieillissement artificiel selon l'une des revendications 1 à 4,
**caractérisé en ce que**
- plusieurs échantillons peuvent être agencés à l'intérieur d'un boîtier (10 ; 70).

6. Appareil pour l'exposition artificielle aux intempéries / le vieillissement artificiel selon l'une des revendications 1 à 4,
**caractérisé en ce que**
- exactement un échantillon peut être agencé à l'intérieur d'un boîtier (10 ; 70).

7. Appareil pour l'exposition artificielle aux intempéries / le vieillissement artificiel selon l'une des revendications 1 à 6,
**caractérisé en ce que**
- plusieurs boîtiers peuvent être agencés dans la chambre d'exposition artificielle aux intempéries / de vieillissement artificiel (50).

8. Appareil pour l'exposition artificielle aux intempéries / le vieillissement artificiel selon l'une des revendications 1 à 6,
**caractérisé en ce que**
- exactement un boîtier (70) peut être agencé dans la chambre d'exposition artificielle aux intempéries / de vieillissement artificiel (50).
